# EUROPÄISCHE PATENTANMELDUNG

(11) **EP 3 919 223 A1**
(43) Veröffentlichungstag der Anmeldung: **08.12.2021**
(21) Anmeldenummer: 21174245.7
(22) Anmeldetag: 18.05.2021
(51) Int. Cl.: B23Q 1/01, B23Q 7/14, B23K 26/08, B23K 37/04, B65H 5/04, B21D 43/13

(54) **TRANSFERVORRICHTUNG ZUM TRANSFER VON PLATTENARTIGEN WERKSTÜCKEN UND MASCHINELLE ANORDNUNG ZUM BEARBEITEN VON PLATTENARTIGEN WERKSTÜCKEN**

(30) Priorität: 04.06.2020 DE 102020114793
(71) Anmelder: TRUMPF Werkzeugmaschinen GmbH + Co. KG, 71254 Ditzingen (DE)
(72) Erfinder: Harnisch, Gunter, 01936 Königsbrück (DE); Knobel, Carsten, 02681 Wilthen (DE); Kupferschmidt, Uwe, 02681 Schirgiswalde (DE); Wowtscherk, Patrick, 02699 Neschwitz (DE); Sjödin, Niclas, 02625 Bautzen (DE)
(74) Vertreter: Kohler Schmid Möbus Patentanwälte

(57) **Zusammenfassung**

Eine Transfervorrichtung (3) zum Transfer von plattenartigen Werkstücken zwischen einer Position abseits einer Funktionseinheit (2) einer maschinellen Anordnung (1) zum Bearbeiten der Werkstücke und einer Position an der Funktionseinheit (2) weist zwei Werkstückträger (6, 7) und für jeden der Werkstückträger (6, 7) eine Bewegungsbahn (8, 12) auf. In einem Überlappungsbereich der Bewegungsbahnen (8, 12) ist eine Bahnspur als gemeinsame Bahnspur (16) der Bewegungsbahnen (8, 12) der Werkstückträger (6, 7) vorgesehen. Die Bewegungsbahn (8, 12) jedes der Werkstückträger (6, 7) weist in dem Überlappungsbereich der Bewegungsbahnen (8, 12) zusätzlich zu der gemeinsamen Bahnspur (16) eine weitere Bahnspur (17, 18; 29) auf, welche von der gemeinsamen Bahnspur (16) unter Ausbildung einer Bahnspurweite (rt₁, rt₂) der Bewegungsbahn (8, 12) des Werkstückträgers (6, 7) in der Querrichtung der Transferrichtung (11) beabstandet ist.

## Beschreibung

Die Erfindung betrifft eine Transfervorrichtung zum Transfer von plattenartigen Werkstücken, insbesondere von Blechen, zwischen einer Position abseits einer Funktionseinheit einer maschinellen Anordnung zum Bearbeiten der Werkstücke und einer Position an der Funktionseinheit, mit zwei Werkstückträgern, die jeweils zur Lagerung eines Werkstücks ausgebildet sind sowie mit einer Bewegungsbahn für jeden der Werkstückträger,
- wobei jeder der Werkstückträger zwischen einer funktionsfernen Position des Werkstückträgers und einer funktionsnahen Position des Werkstückträgers mit einer Transferbewegung in einer Transferrichtung des Werkstückträgers bewegbar ist, wobei die funktionsferne Position des Werkstückträgers der Position des von dem Werkstückträger gelagerten Werkstücks abseits der Funktionseinheit der maschinellen Anordnung zugeordnet ist und wobei die funktionsnahe Position des Werkstückträgers der Position des von dem Werkstückträger gelagerten Werkstücks an der Funktionseinheit zugeordnet ist,
- wobei sich die Bewegungsbahn jedes der Werkstückträger in der Transferrichtung erstreckt und ein Bahnspurpaar mit zwei Bahnspuren umfasst, die mit ihrer Längsrichtung in der Transferrichtung verlaufen und die unter Ausbildung einer Bahnspurweite der Bewegungsbahn in Querrichtung der Transferrichtung voneinander beabstandet sind,
- wobei die Bahnspurweiten der Bewegungsbahnen der Werkstückträger unterschiedlich bemessen sind und eine Bewegungsbahn mit einer größeren Bahnspurweite sowie eine Bewegungsbahn mit einer kleineren Bahnspurweite vorgesehen ist,
- wobei die Bewegungsbahnen der Werkstückträger in einem der Funktionseinheit der maschinellen Anordnung räumlich zugeordneten Überlappungsbereich der Bewegungsbahnen einander in der Transferrichtung überlappen,
- wobei jeder der Werkstückträger Bewegungsmittel aufweist, die unter Ausbildung einer Trägerspurweite in der Querrichtung der Transferrichtung voneinander beabstandet sind,
- wobei einer der Werkstückträger eine größere Trägerspurweite und der andere der Werkstückträger eine kleinere Trägerspurweite aufweist und die Trägerspurweiten der Werkstückträger auf die Bahnspurweiten der Bewegungsbahnen der Werkstückträger abgestimmt sind,
- wobei der Werkstückträger mit der größeren Trägerspurweite der Bewegungsbahn mit der größeren Bahnspurweite und der Werkstückträger mit der kleineren Trägerspurweite der Bewegungsbahn mit der kleineren Bahnspurweite zugeordnet ist und
- wobei die Bewegungsmittel jedes der Werkstückträger zum Teil der einen und zum Teil der anderen der Bahnspuren der Bewegungsbahn des Werkstückträgers zugeordnet sind und zur Ausführung der Transferbewegung des Werkstückträgers an den Bahnspuren der Bewegungsbahn des Werkstückträgers in der Transferrichtung beweglich gelagert sind.

Die Erfindung betrifft außerdem eine maschinelle Anordnung zum Bearbeiten von plattenartigen Werkstücken, insbesondere von Blechen, mit einer Funktionseinheit sowie mit einer Transfervorrichtung der vorgenannten Art, mittels derer die Werkstücke zwischen einer Position abseits der Funktionseinheit und einer Position an der Funktionseinheit transferierbar sind.

Gattungsgemäßer Stand der Technik ist offenbart in DE 198 59 363 A1.

Der Stand der Technik betrifft eine Blechbearbeitungsmaschine zum Bearbeiten von unterschiedlichen Blechformaten. Ein an einem Arbeitsraum der Blechbearbeitungsmaschine vorgesehener Wechseltisch dient dazu, den Arbeitsraum mit zu bearbeitenden Blechen zu beschicken und bearbeitete Bleche aus dem Arbeitsraum abzuführen. Zur Bewegung zwischen einer Position außerhalb des Arbeitsraums und einer Position innerhalb des Arbeitsraums und auch während der Bearbeitung im Inneren des Arbeitsraums ist das betreffende Blech auf einem als Werkstückträger vorgesehenen Auszug des Wechseltischs gelagert. Dabei umfasst der Wechseltisch zur Lagerung von Blechen insgesamt drei Auszüge, die an einer Tragstruktur des Wechseltischs auf zwei Ebenen angeordnet sind. Sämtliche Auszüge des Wechseltischs sind zwischen einer bearbeitungsfernen Position außerhalb des Arbeitsraums und einer bearbeitungsnahen Position innerhalb des Arbeitsraums in einer Transferrichtung bewegbar. Zwei Kleinformatauszüge zur Lagerung von Blechen mit kleinerem Format liegen an der Tragstruktur des Wechseltischs nebeneinander und dabei oberhalb eines zur Lagerung von Blechen mit größerem Format vorgesehenen Großformatauszugs. Die beiden Kleinformatauszüge weisen übereinstimmende Abmessungen auf und sind in der Querrichtung der Transferrichtung jeweils in etwa halb so breit wie der Großformatauszug. Als Bewegungsbahnen, längs derer die beiden Kleinformatauszüge und der Großformatauszug verfahren können, dienen in der Transferrichtung verlaufende Längsführungen. Für jeden der Auszüge sind zwei ausschließlich für diesen Auszug bestimmte Längsführungen vorgesehen, an denen der Auszug mit seinen in der Transferrichtung verlaufenden Rändern beweglich gelagert ist.

Eine konstruktive Vereinfachung des gattungsgemäßen Standes der Technik ist Aufgabe der vorliegenden Erfindung.

Erfindungsgemäß gelöst wird diese Aufgabe durch die Transfervorrichtung gemäß Patentanspruch 1 und durch die maschinelle Anordnung gemäß Patentanspruch 12.

Im Falle der Erfindung wird in dem Überlappungsbereich der Bewegungsbahnen der Werkstückträger eine Bahnspur als gemeinsame Bahnspur der Bewegungsbahnen beider Werkstückträger genutzt. Die gemeinsame Bahnspur wird von einer der Bahnspuren des einen der Werkstückträger und von einer der Bahnspuren des anderen der Werkstückträger ausgebildet. An der gemeinsamen Bahnspur ist sowohl der Werkstückträger mit der größeren Trägerspurweite als auch der Werkstückträger mit der kleineren Trägerspurweite zur Ausführung der Transferbewegung zwischen der funktionsfernen und der funktionsnahen Position gelagert und funktionsnah positioniert. In dem Überlappungsbereich der Bahnspurpaare ist entweder der eine der Werkstückträger oder der andere der Werkstückträger in der funktionsnahen Position angeordnet.

Mit der unterschiedlichen Bemessung der Bahnspurweite der Bewegungsbahnen der Werkstückträger geht eine unterschiedliche Bemessung der Trägerspurweite der Werkstückträger einher. Die unterschiedliche Bemessung der Trägerspurweite der Werkstückträger ist erfindungsgemäß insbesondere mit einer unterschiedlichen Bemessung der Erstreckung der Werkstückträger beziehungsweise einer für die Werkstücklagerung vorgesehenen Lagerfläche der Werkstückträger in der Querrichtung der Transferrichtung verbunden. In diesem Fall ist der Werkstückträger mit der größeren Trägerspurweite zur Lagerung von Werkstücken geeignet, die ein größeres Format besitzen als die Werkstücke, die von dem Werkstückträger mit der kleineren Trägerspurweite gelagert werden können.

Dementsprechend bietet die Erfindung die Möglichkeit, insbesondere Werkstückträger für unterschiedliche Werkstückformate mit einem geringen konstruktiven Aufwand zwischen einer Position abseits und einer Position an einer Funktionseinheit einer maschinellen Anordnung zum Bearbeiten von plattenartigen Werkstücken zu transferieren.

In bevorzugter Ausgestaltung der Erfindung ist die erfindungsgemäße maschinelle Anordnung für die Überformatbearbeitung vorgesehen. Zumindest der Werkstückträger mit der größeren Trägerspurweite lagert dementsprechend Werkstücke, deren Erstreckung in der Transferrichtung größer ist als die entsprechende Abmessung des Arbeitsbereichs einer als Funktionseinheit vorgesehenen Bearbeitungseinheit der maschinellen Anordnung.

Besondere Ausführungsarten der Transfervorrichtung gemäß Patentanspruch 1 und der maschinellen Anordnung gemäß Patentanspruch 12 ergeben sich aus den abhängigen Patentansprüchen 2 bis 11 und 13 bis 15.

Ausweislich Patentanspruch 2 wird die gemeinsame Bahnspur der Bewegungsbahnen der beiden Werkstückträger vorteilhafterweise auch zur Führung der Werkstückträger bei der Transferbewegung genutzt. Die als Führungsspur ausgebildete gemeinsame Bahnspur kann insbesondere eine Profilschiene sein. Als werkstückträgerseitige Bewegungsmittel, über welche die Werkstückträger zur Ausführung der Transferbewegung an der Profilschiene gelagert sind, kommen beispielsweise Laufrollen in Frage, die mit einer konkaven Lauffläche auf der Profilschiene abrollen. Alternativ sind insbesondere werkstückträgerseitige Führungsschuhe denkbar, die auf der gemeinsamen Profilschiene der Bewegungsbahnen der Werkstückträger aufsitzen und gemeinsam mit der Profilschiene eine Gleitführung für die Werkstückträger ausbilden.

Die Erfindungsbauart gemäß Patentanspruch 3 zeichnet sich durch eine einfache Bauweise der zusätzlich zu der gemeinsamen Bahnspur vorgesehenen weiteren Bahnspur der Bewegungsbahnen der Werkstückträger aus. Als werkstückträgerseitige Bewegungsmittel können zylindrische Laufrollen auf der als Flachschiene ausführbaren weiteren Bahnspur gelagert sein.

Als Funktionseinheit der maschinellen Anordnung, welcher der Überlappungsbereich der Bewegungsbahnen der Werkstückträger räumlich zugeordnet ist, kommt ausweislich Patentanspruch 4 eine Bearbeitungseinheit zum Bearbeiten plattenartiger Werkstücke in Betracht. Dabei kann der Überlappungsbereich der Bewegungsbahnen der Werkstückträger in einem Arbeitsbereich einer Bearbeitungsvorrichtung der Bearbeitungseinheit angeordnet sein. Als Bearbeitungsvorrichtung weist eine maschinelle Anordnung der erfindungsgemäßen Art insbesondere eine Vorrichtung zur trennenden Blechbearbeitung mittels Laser auf. Ergänzend oder alternativ kann der Überlappungsbereich der Bewegungsbahnen der Werkstückträger beispielsweise auch einer zum Be- und /oder Entladen der Werkstückträger vorgesehenen Be- und/oder Entladevorrichtung räumlich zugeordnet sein.

Gemäß Patentanspruch 5 weist die erfindungsgemäße Transfervorrichtung zur Lagerung der Bahnspuren der Bewegungsbahnen der Werkstückträger eine Tragstruktur auf, die in dem Überlappungsbereich der Bewegungsbahnen der Werkstückträger angeordnet ist. Die Tragstruktur umfasst wenigstens ein tragendes Längselement sowie wenigstens ein tragendes Querelement, wobei das oder die tragenden Längselemente der Tragstruktur längs der Bewegungsbahnen der Werkstückträger und das oder die tragenden Querelemente der Tragstruktur in der Querrichtung der Bewegungsbahnen der Werkstückträger verlaufen. Das oder die tragenden Längselemente und/oder das oder die tragenden Querelemente der Tragstruktur können gleichzeitig für die Funktionseinheit der maschinellen Anordnung eine Begrenzung ausbilden, innerhalb derer der Überlappungsbereich der Bewegungsbahnen der Werkstückträger angeordnet ist.

Ist eine Tragstruktur mit zwei in der Querrichtung der Bewegungsbahnen der Werkstückträger voneinander beabstandeten tragenden Längselementen vorgesehen und ist der Abstand der tragenden Längselemente auf die größere Bahnspurweite abgestimmt, so können die Bahnspuren der Bewegungsbahn mit der größeren Bahnspurweite an den tragenden Längselementen gelagert sein. Weist die Tragstruktur wenigstens zwei in der Längsrichtung der Bewegungsbahnen voneinander beabstandete tragende Querelemente auf, so bieten sich die tragenden Querelemente der Tragstruktur insbesondere zur Lagerung der zusätzlich zu der gemeinsamen Bahnspur vorgesehenen weiteren Bahnspur der Bewegungsbahn mit der kleineren Bahnspurweite an.

In bevorzugter Ausgestaltung der erfindungsgemäßen maschinellen Anordnung begrenzen zwei in der Querrichtung der Bewegungsbahnen der Werkstückträger voneinander beabstandete tragende Längselemente der Tragstruktur der Transfervorrichtung einen Arbeitsbereich einer Bearbeitungsvorrichtung zur vorzugsweise trennenden Werkstückbearbeitung (Patentanspruch 15).

In Falle einer weiteren Erfindungsbauart ist zumindest ein Teil des Überlappungsbereichs der Bewegungsbahnen der Werkstückträger von dem restlichen Teil der Bewegungsbahnen baulich getrennt (Patentanspruch 6). Folglich kann der Überlappungsbereich der Bewegungsbahnen der Werkstückträger gemeinsam mit einer Funktionseinheit, an welcher er angeordnet ist, beispielsweise gemeinsam mit einer Bearbeitungseinheit, deren Arbeitsbereich von einer Tragstruktur der Transfervorrichtung begrenzt wird, eine Baueinheit der betreffenden maschinellen Anordnung ausbilden.

Die zur Ausbildung der Bewegungsbahnen der Werkstückträger zusätzlich zu der gemeinsamen Bahnspur vorgesehenen weiteren Bahnspuren können erfindungsgemäß in zweierlei Weise realisiert sein.

Im Falle der Erfindungsbauart gemäß Patentanspruch 7 sind in dem Überlappungsbereich der Bewegungsbahnen der Werkstückträger zusätzlich zu der gemeinsamen Bahnspur dauerhaft zwei weitere Bahnspuren vorgesehen. Eine erste weitere Bahnspur ist von der gemeinsamen Bahnspur unter Ausbildung der kleineren Bahnspurweite in der Querrichtung der Transferrichtung beabstandet. Eine zusätzlich zu der ersten weiteren Bahnspur vorgesehene zweite weitere Bahnspur bildet zusammen mit der gemeinsamen Bahnspur die Bewegungsbahn mit der größeren Bahnspurweite. Die Bewegungsbahnen der beiden Werkstückträger werden dementsprechend mittels insgesamt drei Bahnspuren realisiert, wobei senkrecht zu der Transferrichtung die gemeinsame Bahnspur und die zweite weitere Bahnspur außen liegen und die erste weitere Bahnspur zwischen der gemeinsamen Bahnspur und der zweiten weiteren Bahnspur angeordnet ist.

Sämtliche Bahnspuren können gegebenenfalls an der Tragstruktur der Transfervorrichtung gelagert werden, die gemeinsame Bahnspur an einem ersten tragenden Längselement der Tragstruktur, die zweite weitere Bahnspur zur Realiserung der größeren Bahnspurweite an einem weiteren tragenden Längselement der Tragstruktur, das von dem ersten tragenden Längselement in der Querrichtung der Transferrichtung einen entsprechenden Abstand aufweist und die erste weitere Bahnspur zur Realisierung der kleineren Bahnspurweite zwischen den beiden tragenden Längselementen an wenigstens einem tragenden Querelement der Tragstruktur.

Alternativ ist im Falle der erfindungsgemäßen Transfervorrichtung gemäß Patentanspruch 10 in dem Überlappungsbereich der Bewegungsbahnen der Werkstückträger eine gemeinsame weitere Bahnspur vorgesehen, die sowohl die weitere Bahnspur der Bewegungsbahn des einen der Werkstückträger als auch die weitere Bahnspur der Bewegungsbahn des anderen der Werkstückträger ausbildet. Zu diesem Zweck ist die gemeinsame weitere Bahnspur mittels einer Stellvorrichtung relativ zu der gemeinsamen Bahnspur der Bewegungsbahnen der Werkstückträger in der Querrichtung der Transferrichtung unter Ausbildung der größeren Bahnspurweite oder unter Ausbildung der kleineren Bahnspurweite zustellbar.

Zur Realisierung der Bewegungsbahnen der beiden Werkstückträger in dem Überlappungsbereich der Bewegungsbahnen bedarf es bei dieser Erfindungsbauart lediglich zweier Bahnspuren. In beiden Zustellpositionen ist die gemeinsame weitere Bahnspur wirksam in Schwerkraftrichtung abgestützt. Zu diesem Zweck kann gegebenenfalls die Tragstruktur der Transfervorrichtung genutzt werden. Dabei besteht insbesondere die Möglichkeit, die gemeinsame weitere Bahnspur bei Realisierung der größeren Bahnspurweite an einem tragenden Längselement der Tragstruktur und bei Realisierung der kleineren Bahnspurweite an einem oder mehreren tragenden Querelementen der Trag-struktur zu lagern.

In bevorzugter Ausgestaltung der erfindungsgemäßen maschinellen Anordnung ist der Überlappungsbereich der Bewegungsbahnen der Werkstückträger einem mit einer Absaugvorrichtung für bearbeitungsbedingte Verunreinigungen versehenen Arbeitsbereich einer Bearbeitungsvorrichtung zur Werkstückbearbeitung räumlich zugeordnet. Die gemeinsame weitere Bahnspur der Bewegungsbahnen der Werkstückträger kreuzt dabei Schottbleche der Absaugvorrichtung, die sich in der Querrichtung der Bahnspuren erstrecken, wobei die gemeinsame weitere Bahnspur innerhalb der Fläche der Schottbleche verläuft. Damit die gemeinsame weitere Bahnspur dessen ungeachtet und ohne Beeinträchtigung der Funktion der Schottbleche in ihrer Querrichtung zugestellt werden kann, weisen die Schottbleche jeweils einen stationären Teil und einen mit der gemeinsamen weiteren Bahnspur gekoppelten beweglichen Teil auf. In dem Verstellbereich der gemeinsamen weiteren Bahnspur sind die stationären Teile der Schottbleche ausgespart, um Zustellbewegungen der gemeinsamen weiteren Bahnspur zuzulassen. Die beweglichen Teile der Schottbleche erstrecken sich in der Zustellrichtung beidseits der gemeinsamen weiteren Bahnspur und vollziehen die Zustellbewegungen der gemeinsamen weiteren Bahnspur mit. Unabhängig von der Zustellposition der gemeinsamen weiteren Bahnspur ergänzen sich der stationäre Teil und der bewegliche Teil eines Schottblechs zu einem vollständigen Schottblech. Infolgedessen sind die Schottbleche der Absaugvorrichtung unabhängig von der Zustellposition der gemeinsamen weiteren Bahnspur voll funktionsfähig.

In vorteilhafter Ausgestaltung der Transfervorrichtungen gemäß Patentanspruch 7 ist für die zwischen der gemeinsamen Bahnspur und der zweiten weiteren Bahnspur angeordnete erste weitere Bahnspur eine Abdeckvorrichtung vorgesehen, mittels derer die Oberseite der ersten weiteren Bahnspur bei Bedarf gegen schädliche äußere Einflüsse geschützt werden kann (Patentanspruch 8). Befindet sich der Überlappungsbereich der Bahnspurpaare etwa in einem Arbeitsbereich einer Bearbeitungsvorrichtung zur Werkstückbearbeitung und ist der Werkstückträger mit der größeren Trägerspurweite mit einem an seiner Oberseite gelagerten Werkstück in die funktionsnahe Position transferiert, so wäre die unterhalb des Werkstückträgers gelegene und bei diesem Betriebszustand der maschinellen Anordnung ungenutzte erste weitere Bahnspur bei einer Werkstückbearbeitung insbesondere an ihrer Oberseite bearbeitungsbedingten Verschmutzungen ausgesetzt. Mittels der in einen Funktionszustand überführten Abdeckvorrichtung werden derartige Verschmutzungen von der ersten weiteren Bahnspur ferngehalten.

Gemäß Patentanspruch 9 weist die Abdeckvorrichtung für die erste weitere Bahnspur eine Abdeckhaube auf, die um eine in der Längsrichtung der ersten weiteren Bahnspur verlaufende Schwenkachse in eine Funktionsstellung und in eine Außerfunktionsstellung schwenkbar ist. In der Funktionsstellung deckt die Abdeckhaube die erste weitere Bahnspur an der Oberseite ab. Bei Außerfunktionsstellung der Abdeckhaube ist die Oberseite der ersten weiteren Bahnspur insbesondere zur Lagerung der zugeordneten Bewegungsmittel des Werkstückträgers mit der kleineren Trägerspurweite zugänglich.

In bevorzugter Ausgestaltung der Transfervorrichtung gemäß Patentanspruch 10 ist ausweislich Patentanspruch 11 für die gemeinsame weitere Bahnspur eine Stellvorrichtung vorgesehen, die ein in der Querrichtung der Transferrichtung teleskopierbares Zustellorgan aufweist, an welchem die gemeinsame weitere Bahnspur angebracht und mittels dessen die gemeinsame weitere Bahnspur in der Querrichtung der Transferrichtung zustellbar ist. Zur Lagerung des teleskopierbaren Zustellorgans der Stellvorrichtung und auch zur Lagerung von Antriebsmitteln für das teleskopierbare Zustellorgan kann gegebenenfalls die Tragstruktur der erfindungsgemäßen Transfervorrichtung genutzt werden.

An der erfindungsgemäßen maschinellen Anordnung gemäß Patentanspruch 13 fahren die Werkstückträger die funktionsnahe Position gegenläufig aus funktionsfernen Positionen an, die einander an dem Überlappungsbereich der Bewegungsbahnen der Werkstückträger gegenüberliegen. Auf diese Art und Weise sind für den Transfer der Werkstückträger kurze Taktzeiten realisierbar. Noch während der eine Werkstückträger aus der funktionsnahen Position in die funktionsferne Position transferiert wird, kann der andere Werkstückträger bereits aus der funktionsfernen Position in die funktionsnahe Position überführt werden. Kurze Taktzeiten für den Transfer der Werkstückträger sind bei räumlicher Zuordnung des Überlappungsbereichs der Bewegungsbahnen der Werkstückträger zu einer Bearbeitungseinheit mit kurzen Taktzeiten für die Werkstückbearbeitung verbunden.

Patentanspruch 14 betrifft eine besonders praxisrelevante Bauart der erfindungsgemäßen maschinellen Anordnung. Erfindungsgemäß bevorzugt wird eine maschinelle Anordnung mit einer Funktionseinheit zur trennenden Blechbearbeitung mittels Laser.

Nachfolgend wird die Erfindung anhand beispielhafter schematische Darstellungen näher erläutert. Es zeigen:
- Figur 1: eine maschinelle Anordnung für die trennende Blechbearbeitung mittels Laser mit einer Bearbeitungseinheit und einer Werkstück-Transfervorrichtung erster Bauart,
- Figur 2: eine vergrößerte Darstellung der Bearbeitungseinheit der maschinellen Anordnung gemäß Figur 1 mit der WerkstückTransfervorrichtung in einem ersten Funktionszustand,
- Figur 3: die Anordnung gemäß Figur 2 mit der Werkstück-Transfervorrichtung in einem zweiten Funktionszustand,
- Figur 4: die Anordnung gemäß Figur 3 mit einer für ein großformatiges Blech vorgesehenen Werkstückpalette der WerkstückTransfervorrichtung in einer funktionsnahen Position,
- Figur 5: die maschinelle Anordnung gemäß Figur 1 mit der ein großformatiges Blech lagernden Werkstückpalette in einer funktionsnahen Position,
- Figur 6: die maschinelle Anordnung gemäß Figur 1 mit einer ein kleinformatiges Blech lagernden Werkstückpalette in einer funktionsnahen Position,
- Figur 7: eine maschinelle Anordnung für die trennende Blechbearbeitung mittels Laser mit einer Bearbeitungseinheit und einer Werkstück-Transfervorrichtung zweiter Bauart in einem ersten Funktionszustand,
- Figur 8: die maschinelle Anordnung gemäß Figur 7 mit der Werkstück-Transfervorrichtung in einem zweiten Funktionszustand,
- Figur 9: die maschinelle Anordnung gemäß Figur 7 mit einer ein großformatiges Blech lagernden Werkstückpalette der Werkstück-Transfervorrichtung in einer funktionsnahen Position und
- Figur 10: die maschinelle Anordnung gemäß Figur 8 mit einer ein kleinformatiges Blech lagernden Werkstückpalette der Werkstück-Transfervorrichtung in einer funktionsnahen Position.

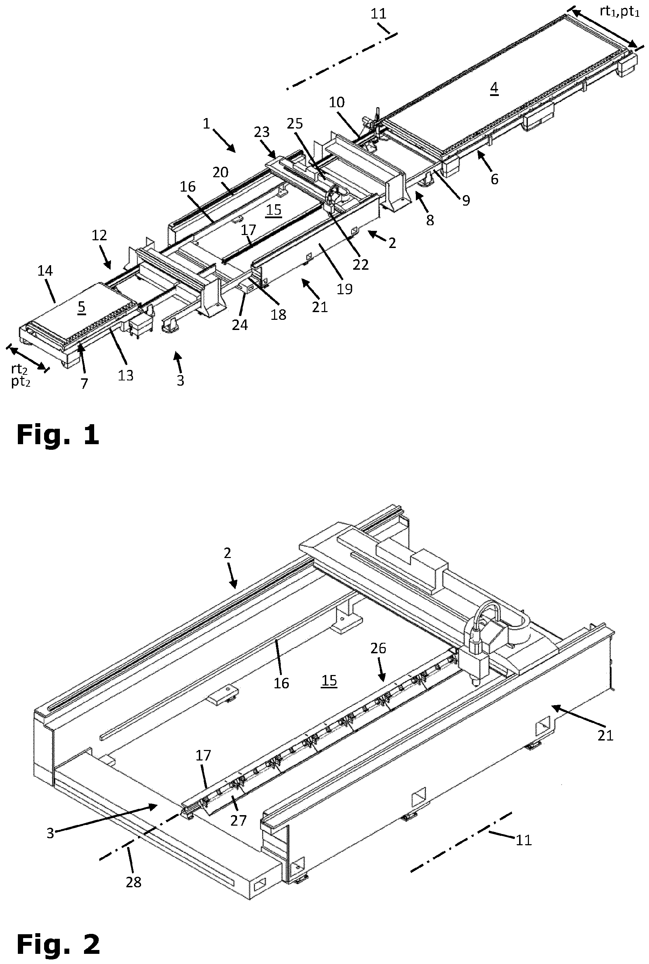

Gemäß Figur 1 umfasst eine maschinelle Anordnung 1 für die trennende Blechbearbeitung mittels Laser als Funktionseinheit eine Bearbeitungseinheit in Form einer Laser-Flachbettmaschine 2 und außerdem eine Transfervorrichtung 3. Mittels der Transfervorrichtung 3 können Bleche, im Einzelnen ein großformatiges Blech 4 und ein kleinformatiges Blech 5, zwischen einer Position abseits der Laser-Flachbettmaschine 2 und einer Position an der Laser-Flachbettmaschine 2 transferiert werden.

Die Laser-Flachbettmaschine 2 ist mit einer Einhausung üblicher Bauart versehen, von der in Figur 1 lediglich zwei der Laser-Flachbettmaschine 2 benachbarte Schleusen gezeigt sind. Durch die mit Strahlschutzeinrichtungen versehenen Schleusen werden die Bleche 4, 5 zwischen dem Inneren und dem Äußeren der Einhausung transferiert.

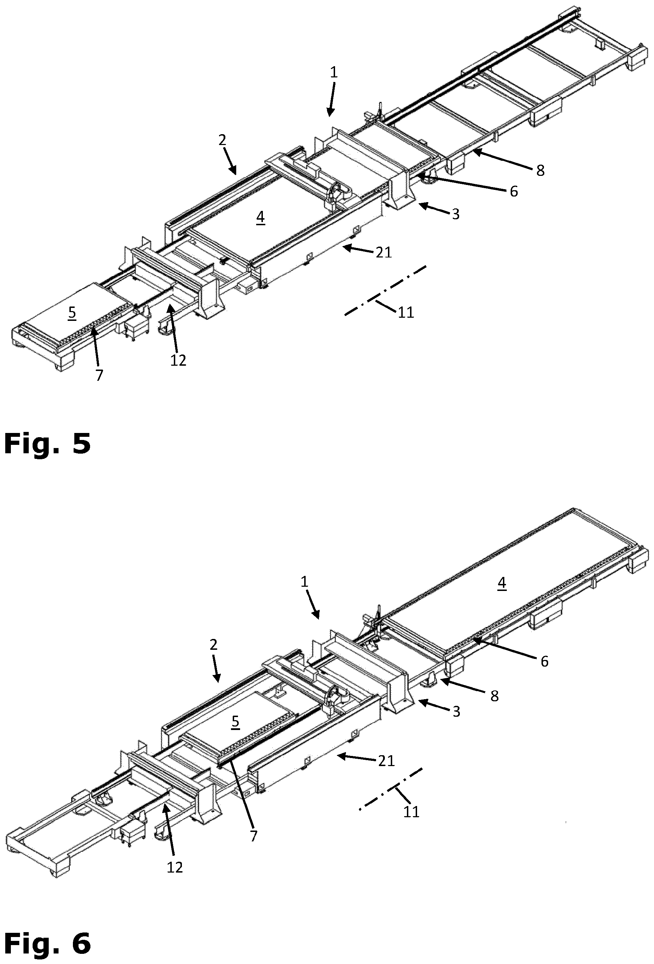

Zur Lagerung des großformatigen Blechs 4 ist als Werkstückträger der Transfervorrichtung 3 eine großformatige Werkstückpalette 6 vorgesehen. Zur Lagerung des kleinformatigen Blechs 5 dient eine kleinformatige Werkstückpalette 7 der Transfervorrichtung 3. In Figur 1 befinden sich die Werkstückpaletten 6, 7 in einer funktionsfernen Position. Die von den Werkstückpaletten 6, 7 gelagerten Bleche 4, 5 sind folglich abseits der Laser-Flachbettmaschine 2 angeordnet. Die Figuren 5 und 6 zeigen die Werkstückpaletten 6, 7 in einer funktionsnahen Position. Bei funktionsnaher Position der Werkstückpaletten 6, 7 sind die Bleche 4, 5 an der Laser-Flachbettmaschine 2 angeordnet und dort zur trennenden Bearbeitung zugänglich.

Für die großformatige Werkstückpalette 6 weist die Transfervorrichtung 3 eine Bewegungsbahn 8 mit Bahnspuren 9, 10 auf. Die Bahnspuren 9, 10 der Bewegungsbahn 8 werden von Schienen gebildet, die parallel zueinander in einer in Figur 1 strichpunktiert angedeuteten Transferrichtung 11 verlaufen und die senkrecht zu der Transferrichtung 11 unter Ausbildung einer Bahnspurweite rt₁ voneinander beabstandet sind.

In entsprechender Weise umfasst eine Bewegungsbahn 12 für die kleinformatige Werkstückpalette 7 schienenartige Bahnspuren 13, 14, die in der Transferrichtung 11 verlaufen und senkrecht zu der Transferrichtung 11 unter Ausbildung einer Bahnspurweite rt₂ voneinander beabstandet sind.

Die Bahnspurweiten rti, rt₂ der Bewegungsbahnen 8, 12 beziehungsweise der Bahnspurpaare 9, 10; 13, 14 sind unterschiedlich bemessen, wobei es sich bei der Bahnspurweite rt₁ um die größere Bahnspurweite und bei der Bahnspurweite rt₂ um die kleinere Bahnspurweite handelt.

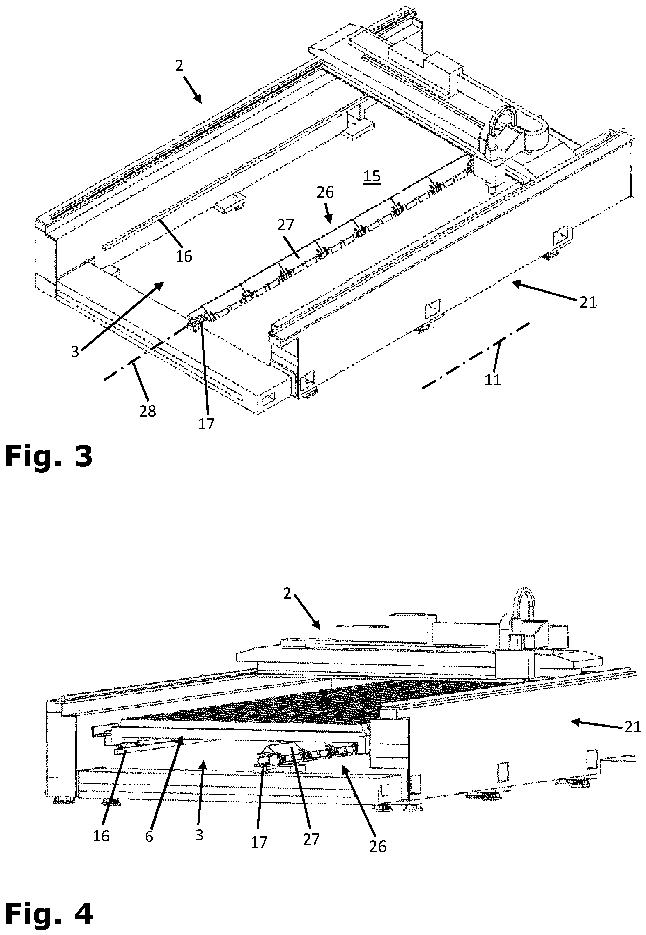

Zur Ausführung von Transferbewegungen längs der Bewegungsbahnen 8, 12 sind die Werkstückpaletten 6, 7 mit Bewegungsmitteln in Form von Laufrollen versehen. Zwei Laufrollen an der Werkstückpalette 6 sind in Figur 4 zu erkennen. In den übrigen Abbildungen sind die Laufrollen verdeckt.

Die Laufrollen an der Werkstückpalette 6 sind zum Teil der Bahnspur 9 und zum Teil der Bahnspur 10 der Bewegungsbahn 8 zugeordnet und sind unter Ausbildung einer Trägerspurweite pt₁ senkrecht zu der Transferrichtung 11 voneinander beabstandet. Die Trägerspurweite pt₁ ist auf die Bahnspurweite rt₁ abgestimmt.

Die Laufrollen der Werkstückpalette 7 sind zum Teil auf der Bahnspur 13 und zum Teil auf der Bahnspur 14 der Bewegungsbahn 12 gelagert. In Querrichtung der Transferrichtung 11 sind die Laufrollen der Werkstückpalette 7 unter Ausbildung einer auf die Bahnspurweite rt₂ der Bewegungsbahn 12 abgestimmten Trägerspurweite pt₂ voneinander beabstandet. Die Trägerspurweite pt₁ der Werkstückpalette 6 ist größer als die Trägerspurweite pt₂ der Werkstückpalette 7.

Ein Überlappungsbereich der Bewegungsbahnen 8, 12 der Werkstückpaletten 6, 7 umfasst einen Arbeitsbereich 15 der Laser-Flachbettmaschine 2. In dem Überlappungsbereich überlappen die Bewegungsbahn 8 der Werkstückpalette 6 und die Bewegungsbahn 12 der Werkstückpalette 7 einander in der Transferrichtung 11.

Ausgehend von dem Überlappungsbereich der Bewegungsbahnen 8, 12 verlaufen die Bewegungsbahnen 8, 12 der Werkstückträger 6, 7 in einander entgegengesetzten Richtungen. Die Transferbewegungen, mit denen der eine der Werkstückträger 6, 7 in die funktionsnahe Position und in die funktionsferne Position bewegbar ist, sind gegenläufig zu den Transferbewegungen, mit denen der andere der Werkstückträger 6, 7 in die funktionsnahe Position und in die funktionsferne Position bewegbar ist.

In dem Überlappungsbereich der Bewegungsbahnen 8, 12 ist eine gemeinsame Bahnspur 16 sowohl Teil der Bahnspur 10 der Bewegungsbahn 8 für die Werkstückpalette 6 als auch Teil der Bahnspur 14 der Bewegungsbahn 12 für die Werkstückpalette 7. Der gemeinsamen Bahnspur 16 ist eine von einer Teillänge der Bahnspur 13 der Bewegungsbahn 12 gebildete erste weitere Bahnspur 17 unter Ausbildung der kleineren Bahnspurweite rt₂ senkrecht zu der Transferrichtung 11 benachbart. Eine zweite weitere Bahnspur 18, die eine Teillänge der Bahnspur 9 der Bewegungsbahn 8 bildet, ist von der gemeinsamen Bahnspur 16 unter Ausbildung der größeren Bahnspurweite rt₁ senkrecht zu der Transferrichtung 11 beabstandet.

Wie insbesondere Figur 5 veranschaulicht, ist die maschinelle Anordnung 1 zur Überformatbearbeitung einsetzbar und dementsprechend zur trennenden Bearbeitung von Blechen, deren Abmessung in der Transferrichtung 11 größer ist als die entsprechende Erstreckung des Arbeitsraums 15 der Laser-Flachbettmaschine 2. Damit auch der in Figur 5 außerhalb des Arbeitsbereichs 15 gelegene Bereich des Blechs 4 zur Bearbeitung im Innern des Arbeitsraums 15 angeordnet werden kann, sind die gemeinsame Bahnspur 16 und die zweite weitere Bahnspur 18 der Bewegungsbahn 8 für die Werkstückpalette 6 über die Einhausung der Laser-Flachbettmaschine 2 hinaus zu der bearbeitungsfernen Position der kleinformatigen Werkstückpalette 7 hin verlängert.

In dem Arbeitsbereich 15 der Laser-Flachbettmaschine 2 werden die gemeinsame Bahnspur 16, die erste weitere Bahnspur 17 und die zweite weitere Bahnspur 18 von Längenabschnitten der Bahnspuren 10, 14, 13 und 9 gebildet, die von den Restlängen der Bahnspuren 10, 14, 13 und 9 baulich getrennt sind.

Die gemeinsame Bahnspur 16 dient sowohl zur Lagerung der in die funktionsnahe Position in dem Arbeitsbereich 15 der Laser-Flachbettmaschine 2 transferierten Werkstückpalette 6 als auch zur Lagerung der in die funktionsnahe Position in dem Arbeitsbereich 15 der Laser-Flachbettmaschine 2 transferierten Werkstückpalette 7.

Ebenso wie die übrigen Längenabschnitte der Bahnspur 10 der Bewegungsbahn 8 und der Bahnspur 14 der Bewegungsbahn 12 ist auch die gemeinsame Bahnspur 16 als Profilschiene ausgeführt. Die betreffenden Laufrollen an den Werkstückpaletten 6, 7 stützen sich mit einer konkaven Lauffläche auf der gemeinsamen Bahnspur 16 ab. Aufgrund des Zusammenwirkens der profilierten gemeinsamen Bahnspur 16 und der konkaven Laufflächen an den Laufrollen der Werkstückpaletten 6, 7 sind die Werkstückpaletten 6, 7 bei Transferbewegungen in der Transferrichtung 11 geführt.

Die erste weitere Bahnspur 17 wird ausschließlich für den Transfer und die funktionsnahe Positionierung der Werkstückpalette 7 genutzt. Entsprechend dient die zweite weitere Bahnspur 18 ausschließlich für den Transfer und zur funktionsnahen Positionierung der Werkstückpalette 6.

Ebenso wie die Restlängen der Bahnspuren 13 und 9 sind auch die erste weitere Bahnspur 17 und die zweite weitere Bahnspur 18 jeweils als Flachschiene mit einer an ihrer Oberseite vorgesehenen ebenen Lagerfläche ausgebildet, auf welcher die zugeordneten Laufrollen der Werkstückpaletten 6, 7 mit zylindrischen Laufflächen aufliegen.

In Schwerkraftrichtung sind die gemeinsame Bahnspur 16 und die zweite weitere Bahnspur 18 an tragenden Längselementen 19, 20 einer Tragstruktur 21 der Transfervorrichtung 3 gelagert. Die tragenden Längselemente 19, 20 der Tragstruktur 21 bilden gleichzeitig Längsbegrenzungen des Arbeitsbereichs 15 der Laser-Flachbettmaschine 2. An der Oberseite der tragenden Längselemente 19, 20 ist in üblicher Weise eine mit einer Bearbeitungsvorrichtung, im Einzelnen mit einem Laserschneidkopf 22, versehene Bewegungseinheit 23 der Laser-Flachbettmaschine 2 längs der tragenden Längselemente 19, 20 angetrieben bewegbar.

Zur Abstützung der ersten weiteren Bahnspur 17 in Schwerkraftrichtung dienen tragende Querelemente 24, 25 der Tragstruktur 21, die in der Transferrichtung 11 voneinander beabstandet sind.

Wie aus den Figuren 2 und 3 hervorgeht, ist die erste weitere Bahnspur 17 in dem Arbeitsbereich 15 der Laser-Flachbettmaschine 2 mit einer Abdeckvorrichtung 26 versehen. Die Abdeckvorrichtung 26 umfasst eine Abdeckhaube 27, die um eine in den Figuren 2 und 3 strichpunktiert angedeutete und in der Längsrichtung der ersten weiteren Bahnspur 17 verlaufende Schwenkachse 28 in eine Außerfunktionsstellung (Figur 2) und in eine Funktionsstellung (Figur 3) geschwenkt werden kann. Zur Ausführung der Schwenkbewegungen der Abdeckhaube 27 dient ein motorischer Antrieb herkömmlicher Bauart.

Bei Außerfunktionsstellung der Abdeckhaube 27 kann die erste weitere Bahnspur 17 zur Lagerung beziehungsweise zum Transfer der Werkstückpalette 7 genutzt werden. An ihrer Oberseite ist die erste weitere Bahnspur 17 in diesem Fall für die Laufrollen der Werkstückpalette 7 zugänglich.

In der Funktionsstellung deckt die Abdeckhaube 27 die Oberseite der ersten weiteren Bahnspur 17 ab. Dadurch ist die erste weitere Bahnspur 17 an ihrer Oberseite gegen schädliche äußere Einflüsse geschützt.

In die Funktionsstellung wird die Abdeckhaube 27 der Abdeckvorrichtung 26 stets dann geschwenkt, wenn die großformatige Werkstückpalette 6 in den Arbeitsbereich 15 der Laser-Flachbettmaschine 2 transferiert ist und ein an der Oberseite der Werkstückpalette 6 gelagertes großformatiges Blech 4 mittels des Laserschneidkopfs 22 der Laser-Flachbettmaschine 2 trennend bearbeitet wird. Ein entsprechender Betriebszustand der maschinellen Anordnung 1 ist in Figur 5 veranschaulicht. In Figur 4 ist die großformatige Werkstückpalette 6 ebenfalls in die funktionsnahe Position eingefahren. Das auf der Werkstückpalette 6 zur Bearbeitung gelagerte Blech 4 ist der Einfachheit halber nicht dargestellt. Die in die Funktionsstellung geschwenkte Abdeckhaube 27 schützt die erste weitere Bahnspur 17 bei der trennenden Bearbeitung großformatiger Bleche 4 insbesondere vor bearbeitungsbedingt anfallenden Verunreinigungen wie etwa Schlacke und Metallpartikeln.

In die Außerfunktionsstellung ist die Abdeckhaube 27 stets dann überführt, wenn die kleinformatige Werkstückpalette 7 in den Arbeitsbereich 15 der Laser-Flachbettmaschine 2 einfährt und dort für die Bearbeitung eines an der Oberseite der Werkstückpalette 7 gelagerten Blechs 5 verbleibt. In diesem Betriebszustand ist die maschinelle Anordnung 1 in Figur 6 dargestellt.

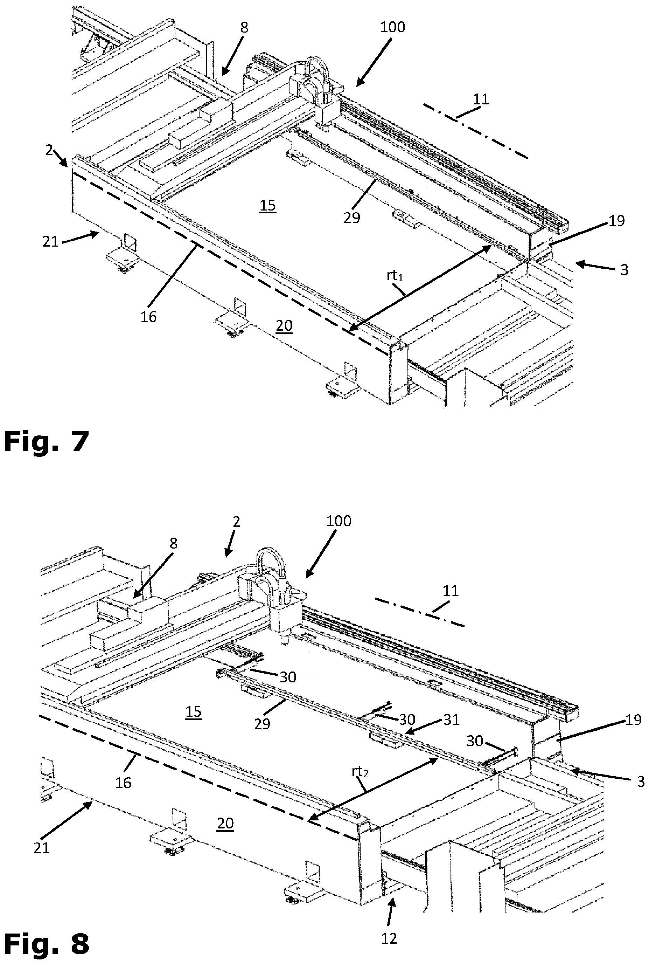

Eine in den Figuren 7 bis 10 dargestellte maschinelle Anordnung 100 unterscheidet sich von der maschinellen Anordnung 1 gemäß den Figuren 1 bis 6 durch die Ausführung des Überlappungsbereichs der Bewegungsbahnen 8, 12 der Werkstückpaletten 6, 7.

Auch im Falle des Ausführungsbeispiels gemäß den Figuren 7 bis 10 ist in dem Überlappungsbereich der Bewegungsbahnen 8, 12 eine gemeinsame Teillänge der Bahnspuren 10, 14 als gemeinsame Bahnspur 16 vorgesehen. In den Figuren 7 bis 10 wird die gemeinsame Bahnspur 16 durch das tragende Längselement 20 der Tragstruktur 21 der Transfervorrichtung 3 verdeckt. Abweichend von den Verhältnissen gemäß den Figuren 1 bis 6 wirkt die gemeinsame Bahnspur 16 der maschinellen Anordnung 100 nicht mit zwei baulich voneinander getrennten weiteren Bahnspuren sondern stattdessen mit einer gemeinsamen weiteren Bahnspur 29 zusammen.

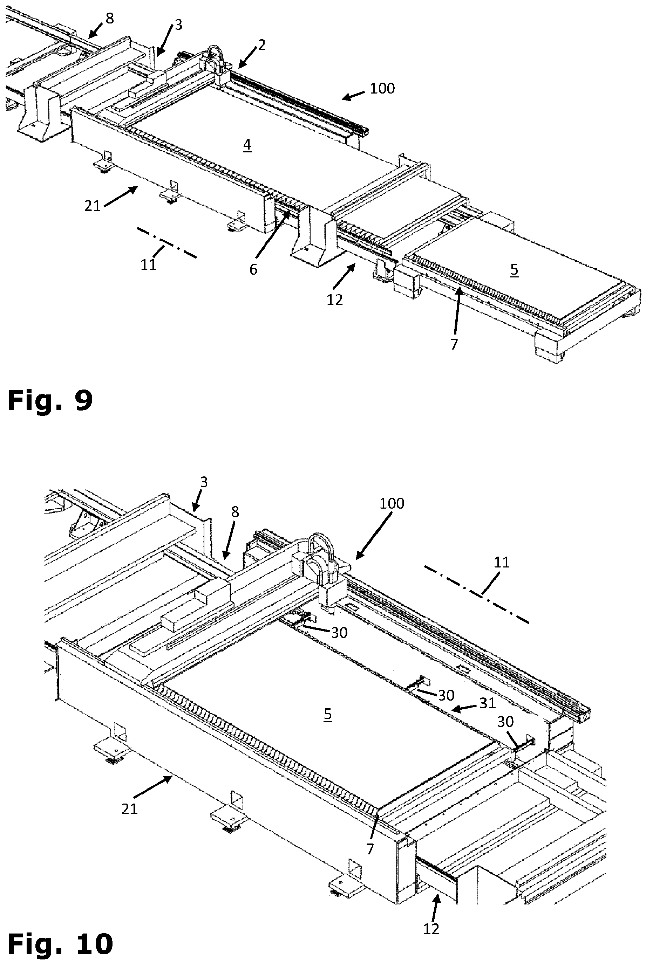

Ausweislich Figur 8 ist die gemeinsame Bahnspur 29 an teleskopierbaren Zustellorganen 30 einer maschinellen Stellvorrichtung 31 angebracht. Mittels der Stellvorrichtung 31 ist die gemeinsame weitere Bahnspur 29 in der Querrichtung der Transfervorrichtung 11 unter Ausbildung der größeren Bahnspurweite rt₁ (Figuren 7, 9) oder unter Ausbildung der kleineren Bahnspurweite rt₂ (Figuren 8, 10) zustellbar. Auch die Stellvorrichtung 31 mit den teleskopierbaren Zustellorganen 30 ist an der Tragstruktur 21, im Einzelnen an dem tragenden Längselement 19 der Tragstruktur 21, gelagert.

In Figur 9 ist die maschinelle Anordnung 100 in einem Betriebszustand gezeigt, in welchem die großformatige Werkstückpalette 6 mit dem großformatigen Blech 4 in die Laser-Flachbettmaschine 2 eingefahren ist. Die Laufrollen der Werkstückpalette 6 sind in dem Überlappungsbereich der Bewegungsbahnen 8, 12 auf der gemeinsamen Bahnspur 16 und der gemeinsamen weiteren Bahnspur 29 gelagert, die in diesem Fall in Querrichtung der Transferrichtung 11 unter Ausbildung der größeren Bahnspurweite rt₁ voneinander beabstandet sind.

In Figur 10 befindet sich die kleinformatige Werkstückpalette 7 mit dem kleinformatigen Blech 5 in der funktionsnahen Position in dem Arbeitsbereich 15 der Laser-Flachbettmaschine 2. Die Laufrollen der Werkstückpalette 7 sind auf der gemeinsamen Bahnspur 16 und der gemeinsamen weiteren Bahnspur 29 gelagert, wobei die gemeinsame weitere Bahnspur 29 mittels der Stellvorrichtung 31 senkrecht zu der Transferrichtung 11 in eine Position zugestellt ist, in welcher sie von der gemeinsamen Bahnspur 16 unter Ausbildung der kleineren Bahnspurweite rt₂ beabstandet ist.

## Patentansprüche

1. Transfervorrichtung zum Transfer von plattenartigen Werkstücken, insbesondere von Blechen (4, 5), zwischen einer Position abseits einer Funktionseinheit (2) einer maschinellen Anordnung (1, 100) zum Bearbeiten der Werkstücke und einer Position an der Funktionseinheit (2), mit zwei Werkstückträgern (6, 7), die jeweils zur Lagerung eines Werkstücks ausgebildet sind sowie mit einer Bewegungsbahn (8, 12) für jeden der Werkstückträger (6, 7),
• wobei jeder der Werkstückträger (6, 7) zwischen einer funktionsfernen Position des Werkstückträgers (6, 7) und einer funktionsnahen Position des Werkstückträgers (6, 7) mit einer Transferbewegung in einer Transferrichtung (11) des Werkstückträgers (6, 7) bewegbar ist, wobei die funktionsferne Position des Werkstückträgers (6, 7) der Position des von dem Werkstückträger (6, 7) gelagerten Werkstücks abseits der Funktionseinheit (2) der maschinellen Anordnung (1, 100) zugeordnet ist und wobei die funktionsnahe Position des Werkstückträgers (6, 7) der Position des von dem Werkstückträger (6, 7) gelagerten Werkstücks an der Funktionseinheit (2) zugeordnet ist,
• wobei sich die Bewegungsbahn (8, 12) jedes der Werkstückträger (6, 7) in der Transferrichtung (11) erstreckt und zwei Bahnspuren (9, 10; 13, 14) umfasst, die mit ihrer Längsrichtung in der Transferrichtung (11) verlaufen und die unter Ausbildung einer Bahnspurweite (rti, rt₂) der Bewegungsbahn (8, 12) in Querrichtung der Transferrichtung (11) voneinander beabstandet sind,
• wobei die Bahnspurweiten (rt₁, rt₂) der Bewegungsbahnen (8, 12) der Werkstückträger (6, 7) unterschiedlich bemessen sind und eine Bewegungsbahn (8) mit einer größeren Bahnspurweite (rt₁) sowie eine Bewegungsbahn (12) mit einer kleineren Bahnspurweite (rt₂) vorgesehen ist,
• wobei die Bewegungsbahnen (8, 12) der Werkstückträger (6, 7) in einem der Funktionseinheit (2) der maschinellen Anordnung (1) räumlich zugeordneten Überlappungsbereich der Bewegungsbahnen (8, 12) einander in der Transferrichtung (11) überlappen,
• wobei jeder der Werkstückträger (6, 7) Bewegungsmittel aufweist, die unter Ausbildung einer Trägerspurweite (pt₁, pt₂) in der Querrichtung der Transferrichtung (11) voneinander beabstandet sind,
• wobei einer der Werkstückträger (6, 7) eine größere Trägerspurweite (pt₁) und der andere der Werkstückträger (6, 7) eine kleinere Trägerspurweite (pt₂) aufweist und die Trägerspurweiten (pt₁, pt₂) der Werkstückträger (6, 7) auf die Bahnspurweiten (rti, rt₂) der Bewegungsbahnen (8, 9) der Werkstückträger (6, 7) abgestimmt sind,
• wobei der Werkstückträger (6) mit der größeren Trägerspurweite (pt₁) der Bewegungsbahn (8) mit der größeren Bahnspurweite (rt₁) und der Werkstückträger (7) mit der kleineren Trägerspurweite (pt₂) der Bewegungsbahn (12) mit der kleineren Bahnspurweite (rt₂) zugeordnet ist und
• wobei die Bewegungsmittel jedes der Werkstückträger (6, 7) zum Teil der einen und zum Teil der anderen der Bahnspuren (9, 10; 13, 14) der Bewegungsbahn (8, 12) des Werkstückträgers (6, 7) zugeordnet sind und zur Ausführung der Transferbewegung des Werkstückträgers (6, 7) an den Bahnspuren (9, 10; 13,14) der Bewegungsbahn (8, 12) des Werkstückträgers (6, 7) in der Transferrichtung (11) beweglich gelagert sind,
**dadurch gekennzeichnet, dass**
in dem Überlappungsbereich der Bewegungsbahnen (8, 12) der Werkstückträger (6, 7) eine der Bahnspuren (9, 10; 13, 14) der Bewegungsbahn (8, 12) des einen der Werkstückträger (6, 7) und eine der Bahnspuren (9, 10; 13, 14) der Bewegungsbahn (8, 12) des anderen der Werkstückträger (6, 7) eine gemeinsame Bahnspur (16) der Bewegungsbahnen (8, 12) der Werkstückträger (6, 7) ausbilden und die Bewegungsbahn (8, 12) jedes der Werkstückträger (6, 7) zusätzlich zu der gemeinsamen Bahnspur (16) eine weitere Bahnspur (17, 18, 29) umfasst, welche von der gemeinsamen Bahnspur (16) unter Ausbildung der Bahnspurweite (rt₁, rt₂) der Bewegungsbahn (8, 12) des Werkstückträgers (6, 7) in der Querrichtung der Transferrichtung (11) beabstandet ist.

2. Transfervorrichtung nach Anspruch 1, **dadurch gekennzeichnet, dass** die gemeinsame Bahnspur (16) der Bewegungsbahnen (8, 12) der Werkstückträger (6, 7) als Führungsspur ausgebildet ist, mittels derer die Werkstückträger (6, 7) bei der Transferbewegung in der Transferrichtung (11) geführt sind.

3. Transfervorrichtung nach einem der vorhergehenden Ansprüche, **dadurch gekennzeichnet, dass** die weitere Bahnspur (17, 18, 29) der Bewegungsbahn (8, 12) wenigstens eines der Werkstückträger (6, 7) an ihrer dem Werkstückträger (6, 7) zugewandten Oberseite eine Lagerfläche ausbildet, auf welcher die zugeordneten Bewegungsmittel des Werkstückträgers (6, 7) in der Transferrichtung (11) und in der Querrichtung der Transferrichtung (11) lose gelagert sind.

4. Transfervorrichtung nach einem der vorhergehenden Ansprüche, **dadurch gekennzeichnet, dass** der Überlappungsbereich der Bewegungsbahnen (8, 12) der Werkstückträger (6, 7) einem Arbeitsbereich (15) einer als Funktionseinheit (2) der maschinellen Anordnung (1) vorgesehenen Bearbeitungseinheit zum Bearbeiten der Werkstücke räumlich zugeordnet ist.

5. Transfervorrichtung nach einem der vorhergehenden Ansprüche, **dadurch gekennzeichnet, dass** die Transfervorrichtung zur Lagerung der Bahnspuren (9, 10; 13, 14) der Bewegungsbahnen (8, 9) der Werkstückträger (6, 7) eine Tragstruktur (21) aufweist, die in dem Überlappungsbereich der Bewegungsbahnen (8, 12) der Werkstückträger (6, 7) angeordnet ist und die wenigstens ein tragendes Längselement (19, 20) sowie wenigstens ein tragendes Querelement (24, 25) umfasst, wobei das tragende Längselement (19, 20) der Tragstruktur (21) längs der Bewegungsbahnen (8, 12) der Werkstückträger (6, 7) und das tragende Querelement (24, 25) der Tragstruktur (21) in der Querrichtung der Bewegungsbahnen (8, 12) der Werkstückträger (6, 7) verläuft.

6. Transfervorrichtung nach einem der vorhergehenden Ansprüche, **dadurch gekennzeichnet, dass** die Bahnspuren (9, 10; 13, 14) der Bewegungsbahnen (8, 9) der Werkstückträger (6, 7) jeweils mehrere in der Transferrichtung (11) aneinander anschließende und baulich voneinander getrennte Längenabschnitte aufweisen, von denen sich jeweils ein Längenabschnitt in dem Überlappungsbereich der Bewegungsbahnen (8, 12) der Werkstückträger (6, 7) erstreckt.

7. Transfervorrichtung nach einem der vorhergehenden Ansprüche, **dadurch gekennzeichnet, dass** in dem Überlappungsbereich der Bewegungsbahnen (8, 12) der Werkstückträger (6, 7)
• eine erste weitere Bahnspur (17) vorgesehen ist, die von der gemeinsamen Bahnspur (16) unter Ausbildung der kleineren Bahnspurweite (rt₂) in der Querrichtung der Transferrichtung (11) beabstandet ist und
• zusätzlich zu der ersten weiteren Bahnspur (17) eine zweite weitere Bahnspur (18) vorgesehen ist, die von der gemeinsamen Bahnspur (16) unter Ausbildung der größeren Bahnspurweite (rt₂) in der Querrichtung der Transferrichtung (11) beabstandet ist.

8. Transfervorrichtung nach Anspruch 7, **dadurch gekennzeichnet, dass** für die erste weitere Bahnspur (17) eine Abdeckvorrichtung (26) vorgesehen ist, mittels derer die erste weitere Bahnspur (17) an einer den Werkstückträgern (6, 7) zugewandten Oberseite der ersten weiteren Bahnspur (17) abdeckbar ist.

9. Transfervorrichtung nach Anspruch 8, **dadurch gekennzeichnet, dass** die Abdeckvorrichtung (26) für die erste weitere Bahnspur (17) eine Abdeckhaube (27) aufweist, die um eine in der Längsrichtung der ersten weiteren Bahnspur (17) verlaufende Schwenkachse (28) in eine Funktionsstellung und in eine Außerfunktionsstellung schwenkbar ist, wobei die Abdeckhaube (27) in der Funktionsstellung die erste weitere Bahnspur (17) an der Oberseite abdeckt und in der Außerfunktionsstellung die Oberseite der ersten weiteren Bahnspur (17) freigibt.

10. Transfervorrichtung nach einem der Ansprüche 1 bis 6, **dadurch gekennzeichnet, dass** in dem Überlappungsbereich der Bewegungsbahnen (8, 12) der Werkstückträger (6, 7) eine gemeinsame weitere Bahnspur (29) sowohl die weitere Bahnspur der Bewegungsbahn (8, 12) des einen der Werkstückträger (6, 7) als auch die weitere Bahnspur der Bewegungsbahn (8, 12) des anderen der Werkstückträger (6, 7) ausbildet, indem die gemeinsame weitere Bahnspur (29) mittels einer Stellvorrichtung (31) relativ zu der gemeinsamen Bahnspur (16) der Bewegungsbahnen (8, 12) der Werkstückträger (6, 7) in der Querrichtung der Transferrichtung (11) unter Ausbildung der größeren Bahnspurweite (rt₁) oder unter Ausbildung der kleineren Bahnspurweite (rt₂) zustellbar ist.

11. Transfervorrichtung nach Anspruch 10, **dadurch gekennzeichnet, dass** die Stellvorrichtung (31) für die gemeinsame weitere Bahnspur (29) ein in der Querrichtung der Transferrichtung (11) teleskopierbares Zustellorgan (30) aufweist, an welchem die gemeinsame weitere Bahnspur (29) angebracht ist und mittels dessen die gemeinsame weitere Bahnspur (29) in der Querrichtung der Transferrichtung (11) zustellbar ist.

12. Maschinelle Anordnung zum Bearbeiten von plattenartigen Werkstücken, insbesondere von Blechen (4, 5), mit einer Funktionseinheit (2) sowie mit einer Transfervorrichtung (3), mittels derer die Werkstücke zwischen einer Position abseits der Funktionseinheit (2) und einer Position an der Funktionseinheit (2) transferierbar sind, **dadurch gekennzeichnet, dass** die Transfervorrichtung (3) nach einem der Ansprüche 1 bis 11 ausgebildet ist.

13. Maschinelle Anordnung nach Anspruch 12, **dadurch gekennzeichnet, dass** die Bewegungsbahnen (8, 12) der Werkstückträger (6, 7) ausgehend von dem Überlappungsbereich der Bewegungsbahnen (8, 12) in einander entgegengesetzten Richtungen verlaufen und dass die Transferbewegungen, mit denen der eine der Werkstückträger (6, 7) in die funktionsnahe Position und in die funktionsferne Position bewegbar ist, gegenläufig sind zu den Transferbewegungen, mit denen der andere der Werkstückträger (6, 7) in die funktionsnahe Position und in die funktionsferne Position bewegbar ist.

14. Maschinelle Anordnung nach Anspruch 12 oder Anspruch 13, **dadurch gekennzeichnet, dass** die maschinelle Anordnung zur trennenden Bearbeitung von Werkstücken ausgebildet ist, indem die Funktionseinheit (2) der maschinellen Anordnung eine Bearbeitungsvorrichtung (22) zur trennenden Werkstückbearbeitung aufweist und dass der Überlappungsbereich der Bewegungsbahnen (8, 12) der Werkstückträger (6, 7) der Transfervorrichtung (3) in einem Arbeitsbereich (15) der Bearbeitungsvorrichtung (22) zur trennenden Werkstückbearbeitung vorgesehen ist, in welchem von den Werkstückträgern (6, 7) der Transfervorrichtung (3) gelagerte Werkstücke für die Bearbeitungsvorrichtung (22) zur trennenden Bearbeitung zugänglich sind.

15. Maschinelle Anordnung nach einem der vorhergehenden Ansprüche, mit einer Transfervorrichtung (3) nach Anspruch 5, **dadurch gekennzeichnet, dass** die Tragstruktur (21) der Transfervorrichtung (3) zwei tragende Längselemente (19, 20) aufweist, die beidseits eines Arbeitsbereichs (15) einer als Funktionseinheit (2) der maschinellen Anordnung (1) vorgesehenen Bearbeitungseinheit zur vorzugsweise trennenden Werkstückbearbeitung längs der Bewegungsbahnen (8, 12) der Werkstückträger (6, 7) verlaufen.
